# EUROPEAN PATENT APPLICATION

(11) **EP 4 223 498 A1**
(43) Date of publication of application: **09.08.2023**
(21) Application number: 21875588.2
(22) Date of filing: 28.09.2021
(51) Int. Cl.: B32B 5/02, B32B 23/02, D21F 13/10, D21H 11/18, D21H 25/04, D21H 27/30

(54) **METHOD FOR PRODUCING MOLDED BODY, MOLDED BODY, AND METHOD FOR PRODUCING MICROFIBRILLATED CELLULOSE-CONTAINING COMPOSITION**

(30) Priority: 30.09.2020 JP 2020165301
(71) Applicant: Risho Kogyo Co., Ltd., Osaka-shi, Osaka 530-0003 (JP)
(72) Inventor: FURUTA, Nao, Amagasaki-shi, Hyogo 661-0012 (JP); OKUMURA, Hiroshi, Amagasaki-shi, Hyogo 661-0012 (JP)
(74) Representative: Viering, Jentschura & Partner mbB Patent- und Rechtsanwälte
(86) International application number: PCT/JP2021/035559
(87) International publication number: WO 2022/071287

(57) **Abstract**

A method for producing a molding includes a step of forming a microfibrillated cellulose-containing composition of a sheet shape by filtering a dispersion solution to achieve a water content of not less than 65 mass% and not more than 85 mass%, a step (S21) of preparing a plurality of sheets of the microfibrillated cellulose-containing composition, a step (S22) of stacking the sheets of microfibrillated cellulose-containing composition in a thickness direction of the sheets, a step (S23) of sandwiching the stacked sheets of microfibrillated cellulose-containing composition with nonwoven fabric arranged on each side in the thickness direction, and a step (S24) of performing heating and compression molding to obtain a plate-shaped molding by heating the sheets of microfibrillated cellulose-containing composition sandwiched with the nonwoven fabric while compressing the sheets at a pressure of not less than 0.1 MPa and not more than 4.0 MPa in the thickness direction.

## Description

### Technical Field

The present disclosure relates to a method for producing a molding, a molding, and a method for producing a microfibrillated cellulose-containing composition.

The present application claims priority based on Japanese Patent Application No. 2020-165301 filed on September 30, 2020, the entire contents of which are incorporated herein by reference.

### Background Art

A technique concerning a material containing cellulose microfibrils is disclosed in Japanese Patent No. 3641690 (Patent Literature 1). A technique concerning a method for producing a molding of microfibrillated cellulose is disclosed in Japanese Patent Application Laid-Open No. 2018-100466 (Patent Literature 1).

### Citation List

### Patent Literature

Patent Literature 1: Japanese Patent No. 3641690
Patent Literature 2: Japanese Patent Application Laid-Open No. 2018-100466

### Summary of Invention

### Technical Problem

Recently, in materials derived from natural materials such as wood, there is a demand for those lighter in weight than metallic materials and having high rigidity, in order to be used in a wide range of applications. When producing a material with high rigidity, it is of course desirable to be able to produce the material efficiently. Further, in consideration of application to various uses, the material with high rigidity is required to have a large planar size. Furthermore, in order to achieve the rigidity, it is desirable to have a certain degree of thickness.

Patent Literature 1 discloses a high strength material composed of 65 to 100 wt.% cellulose microfibrils and 0 to 35 wt.% additive in solid content and having a flexural stress of 200 MPa to 400 MPa as measured using a three-point center concentrated load system under the conditions of room temperature and a relative humidity of 60%. According to Patent Literature 1, a method for producing a material composed solely of microfibrils is as follows. An aqueous suspension of 10% solid content microfibrils is molded into a microfibril sheet, and the sheet is dehydrated until the amount of water in the sheet reaches about 40%, and dried at 70°C for 24 hours. Thereafter, the sheet is hot pressed at 100 MPa and at 150°C for 30 minutes.

However, with such a production method, an extremely high pressure of 100 MPa should be applied during molding. Although the method may address the case of obtaining a molding of small size, a large facility is required to obtain a molding of somewhat large size. That is, there is a limit to the size of the molding that can be obtained in relation to the facility. Therefore, according to such a production method, it is difficult to obtain a molding of desired size. Further, the thickness of the obtained molding is restricted to a thin plate or the like because of the extremely high pressure used in the molding process. Therefore, it is difficult to obtain a molding that is thick in the thickness direction.

Patent Literature 2 discloses a method for producing a molding of microfibrillated cellulose, including the steps of preparing a microfibrillated cellulose suspension in which microfibrillated cellulose is dispersed in water, an organic solvent, or a mixed solvent obtained by mixing an organic solvent into water, preliminarily dehydrating the microfibrillated cellulose suspension in a sealed state, and then performing heating and compression molding.

However, the preliminary dehydration in Patent Literature 2 requires forming a sealed space using a bag and sealing tape. This makes it difficult to efficiently produce the molding even from the standpoint of the complexity of the work. In order to obtain a molding thick in the thickness direction, it is conceivable to stack a plurality of sheets of the obtained microfibrillated cellulose dispersion and perform heating and compression molding to obtain a thick molding. However, with this technique, microfibrillated cellulose fibers do not bond to each other at each boundary of the sheets in the thickness direction, making it unable to obtain a molding of homogeneous material in the thickness direction. On the other hand, it is also conceivable to make the microfibrillated cellulose dispersion somewhat thick in advance before performing heating and compression molding in order to eliminate the creation of boundary of stacked sheets. However, preliminary dehydration for obtaining such a thick microfibrillated cellulose dispersion requires a large amount of time. From this standpoint as well, an efficient method for producing a molding is required.

An object of the present disclosure is to provide a method for producing a molding with which a molding of high rigidity and large size can be produced efficiently. Solution to Problem

A method for producing a molding according to the present disclosure is a method for producing a molding containing microfibrillated cellulose. The molding production method includes the steps of: preparing a dispersion solution with microfibrillated cellulose dispersed in water at a predetermined concentration; forming a microfibrillated cellulose-containing composition of a sheet shape by filtering the dispersion solution such that a water content is not less than 65 mass% and not more than 85 mass%; preparing a plurality of sheets of the microfibrillated cellulose-containing composition; stacking the plurality of sheets of microfibrillated cellulose-containing composition in a thickness direction of the sheets; sandwiching the stacked sheets of microfibrillated cellulose-containing composition with nonwoven fabric arranged on each side in the thickness direction; and performing heating and compression molding to obtain a plate-shaped molding by heating the sheets of microfibrillated cellulose-containing composition sandwiched with the nonwoven fabric while compressing the sheets at a pressure of not less than 0.1 MPa and not more than 4.0 MPa in the thickness direction.

### Advantageous Effects of Invention

According to the method for producing a molding with the above configuration, a molding of high rigidity and large size can be produced efficiently.

### Brief Description of Drawings

FIG. 1 is a schematic perspective view of the appearance of a molded plate according to an embodiment of the present disclosure.
FIG. 2 is a schematic cross-sectional diagram showing, in enlarged view, a portion of the molded plate shown in FIG. 1.
FIG. 3 is a schematic cross-sectional view of a molding according to another embodiment.
FIG. 4 is a flowchart illustrating typical production steps in a method for producing a microfibrillated cellulose-containing composition according to an embodiment of the present disclosure.
FIG. 5 is a schematic cross-sectional view of the obtained microfibrillated cellulose-containing composition.
FIG. 6 is a flowchart illustrating typical production steps in a method for producing the molding according to an embodiment of the present disclosure shown in FIGS. 1 and 2.
FIG. 7 is a schematic cross-sectional view of members in the case of performing heating and compression molding to obtain the molding shown in FIGS. 1 and 2.
FIG. 8 is a flowchart illustrating typical production steps in a method for producing the molding shown in FIG. 3.
FIG. 9 is a schematic cross-sectional view of members in the case of performing heating and compression molding to obtain the molding shown in FIG. 3.

### Description of Embodiments

### [Description of Embodiments of Present Disclosure]

Embodiments of the present disclosure will be first described and listed. A method for producing a molding according to the present disclosure is a method for producing a molding containing microfibrillated cellulose (hereinafter, sometimes simply abbreviated as "MFC"). The molding production method includes the steps of: preparing a dispersion solution with microfibrillated cellulose dispersed in water at a predetermined concentration; forming a microfibrillated cellulose-containing composition of a sheet shape by filtering the dispersion solution such that a water content is not less than 65 mass% and not more than 85 mass%; preparing a plurality of sheets of the microfibrillated cellulose-containing composition; stacking the plurality of sheets of microfibrillated cellulose-containing composition in a thickness direction of the sheets; sandwiching the stacked sheets of microfibrillated cellulose-containing composition with nonwoven fabric arranged on each side in the thickness direction; and performing heating and compression molding to obtain a plate-shaped molding by heating the sheets of microfibrillated cellulose-containing composition sandwiched with the nonwoven fabric while compressing the sheets at a pressure of not less than 0.1 MPa and not more than 4.0 MPa in the thickness direction.

The present inventors investigated a production method for obtaining a molding, made of a material derived from a natural material such as wood, which is of high rigidity and for which lightweight as compared to a metallic material is required in order for use in a wide range of applications. First, the inventors considered using microfibrillated cellulose as the material derived from a natural material such as wood. Further, in producing a molding using microfibrillated cellulose, from the standpoint of efficient production of a large-sized molding, the present inventors studied to avoid compression at a high pressure during heating and compression molding and also to ensure that the resulting molding has high rigidity, and have arrived at the present invention.

The method for producing a molding according to the present disclosure includes the step of forming a microfibrillated cellulose-containing composition of a sheet shape by filtering the dispersion solution so as to achieve a water content of not less than 65 mass% and not more than 85 mass%. This eliminates the need for preparing a bag and sealing tape to create a sealed space at the time of forming the sheet-shaped microfibrillated cellulose-containing composition. It is thus possible to efficiently produce the microfibrillated cellulose-containing composition. That is, a plurality of sheets of microfibrillated cellulose-containing composition can be produced in a short time and with little labor.

The microfibrillated cellulose-containing composition obtained by filtration as described above has surface properties of a relatively rough state. The present inventors found that a sheet-shaped microfibrillated cellulose-containing composition with water removed to some extent by filtration attains such surface properties. For the molding obtained by stacking a plurality of sheets of such microfibrillated cellulose-containing composition and subjecting the sheets to heating and compression molding, the present inventors further found that the microfibrillated cellulose fibers on the surface sides of the stacked sheets of microfibrillated cellulose-containing composition become appropriately entangled with each other in the thickness direction, eliminating the boundary in the thickness direction, thereby making the material homogeneous in the thickness direction. Thus, by adopting such a configuration, a molding of an intended thickness can be obtained. Further, in the microfibrillated cellulose-containing composition obtained by filtration, the microfibrillated cellulose fibers can be densely entangled. This ensures high rigidity for the resulting molding. It should be noted that in the molding obtained in this manner, microfibrillated cellulose is not aligned in one direction, but is randomly arranged. The molding thus is isotropic. That is, for example in the case where the molding is of a plate shape, the rigidity in the longitudinal direction and in the transverse direction can both be made high.

In the heating and compression molding of the stacked sheets of microfibrillated cellulose-containing composition, a plate-shaped molding is obtained by compressing the sheets at a pressure of not less than 0.1 MPa and not more than 4.0 MPa. Since the molding can be done at a relatively low pressure during the heating and compression molding, large facilities are not required, and the size of the molding is less restricted by the facilities. Further, the risk of the material being crushed with a high pressure in the thickness direction can be suppressed. It is thus possible to produce a molding of somewhat large size with a relatively simple facility configuration. It is also readily possible to obtain a stack of a desired thickness.

As such, according to the method for producing a molding described above, a molding of high rigidity and large size can be produced efficiently.

The above method for producing a molding may further include the steps of: preparing a pulp-containing composition of a sheet shape, composed of water and pulp; and sandwiching the pulp-containing composition sheet in between the plurality of sheets of microfibrillated cellulose-containing composition. Since pulp is a commonly used material, the pulp-containing composition of the above configuration can be produced at a lower cost than the microfibrillated cellulose-containing composition. Here, a layer composed of microfibrillated cellulose is arranged on each side of the obtained molding in the thickness direction, which can suppress the reduction in rigidity. Therefore, according to such a method for producing a molding, a molding of high rigidity and desired thickness can be obtained inexpensively.

In the above method for producing a molding, the step of forming the microfibrillated cellulose-containing composition may include suction filtering the dispersion solution. This allows the filtration to be performed in a short time. Accordingly, the molding can be produced more efficiently.

In the above method for producing a molding, the nonwoven fabric may be glass nonwoven fabric. During the heating and compression molding of the stacked sheets of microfibrillated cellulose-containing composition, water in the microfibrillated cellulose-containing composition is compressed and moves mainly in the thickness direction, and then is discharged from the side surface of the nonwoven fabric arranged on each side in the thickness direction. Here, the use of glass nonwoven fabric including glass fibers as the nonwoven fabric allows sufficient pathways for water to be secured in the nonwoven fabric, ensuring smooth discharge of the water. Therefore, a molding of high rigidity and large size can be produced more efficiently.

In the above method for producing a molding, the step of performing the heating and compression molding may include heating the stacked sheets of microfibrillated cellulose-containing composition at a temperature of not lower than 100 degrees and not higher than 150 degrees and maintaining the stacked sheets under a pressure of not less than 0.1 MPa and not more than 4.0 MPa for a period of not shorter than 30 minutes and not longer than 120 minutes. In the heating and compression molding of the stacked sheets of microfibrillated cellulose-containing composition, performing the heating and compression molding within the above temperature range, within the above pressure range, and within the above period range allows a molding of high rigidity and large size to be produced more reliably and more efficiently.

In the above method for producing a molding, the step of performing the heating and compression molding may include performing compression by increasing the pressure stepwise from 0.1 MPa to 4.0 MPa. This can suppress the collapse of the shape of the molding during the heating and compression molding, and also allows the water in the microfibrillated cellulose-containing composition to be discharged efficiently. Therefore, a molding of high rigidity and large size can be produced more reliably and more efficiently.

A molding according to the present disclosure is composed solely of microfibrillated cellulose and has a flexural modulus of not less than 11.0 GPa. Such a molding is good from the standpoint of global environment because it is composed solely of microfibrillated cellulose and contains no resin, metallic material, or the like. Further, with the flexural modulus of 11.0 GPa or higher, the molding can be effectively used for a member that requires rigidity, such as an electronic material or construction material.

A molding according to the present disclosure is of a plate shape, which includes: a first layer composed solely of microfibrillated cellulose; a second layer composed solely of pulp and arranged on the first layer; and a third layer composed solely of microfibrillated cellulose and arranged on a side of the second layer opposite from a side on which the first layer is arranged in a thickness direction; and has a flexural modulus of not less than 11.0 GPa. Such a molding has the configuration in which the second layer composed solely of pulp is sandwiched in between the first layer and the third layer both composed solely of microfibrillated cellulose. The second layer composed solely of pulp can be produced relatively inexpensively. Therefore, the molding as a whole can be produced inexpensively, while having a certain degree of thickness. Further, in this case, the first and third layers composed solely of microfibrillated cellulose are arranged on both sides in the thickness direction of the second layer composed solely of pulp. The first and third layers are homogeneous in the thickness direction and have high rigidity. The molding can thus be increased in rigidity, with the flexural modulus being 11.0 GPa or higher. Therefore, such a molding can also be effectively used when a molding having a certain degree of thickness and having rigidity is required.

The above moldings may have a plate shape with a thickness of not less than 2.0 mm. According to such moldings, since the thickness is 2.0 mm or more, the moldings can be effectively used when a certain degree of thickness is required as a member that requires rigidity. Here, in obtaining a molding having a certain degree of thickness, a plurality of thin plate-shaped moldings obtained using the technique disclosed in Patent Literature 1 or Patent Literature 2 may be stacked and joined to each other by means of an adhesive, for example. However, such a configuration requires enormous time and effort for adhesion in the production process. Further, many boundaries between the adhesive and the molding are created, making it difficult to secure material homogeneity in the thickness direction. Here, according to the moldings of the present disclosure, the time and effort required for adhesion can be reduced, and the homogeneity of the material in the thickness direction can be secured. It should be noted that in the above-described molding of the present disclosure composed solely of microfibrillated cellulose, the material is homogeneous in the thickness direction. Thus, compared to the molding obtained by stacking and joining a plurality of sheets together, the risk of cracking, chipping, peeling, or the like at the boundary portion can be reduced. Therefore, the molding can be effectively used for a member that requires rigidity.

The above moldings may have a density of not less than 1.30 g/cm³ and not more than 1.55 g/cm³. Such moldings can be made highly rigid more reliably.

In the above moldings, the microfibrillated cellulose may have a fiber diameter of not less than 10 nm and not more than 1000 nm. This allows the microfibrillated cellulose fibers in the moldings to be more densely entangled. The rigidity can thus be increased.

A method for producing a microfibrillated cellulose-containing composition according to the present disclosure includes the steps of: preparing a dispersion solution with microfibrillated cellulose dispersed in water at a predetermined concentration; and forming a microfibrillated cellulose-containing composition of a sheet shape by filtering the dispersion solution such that a content ratio of the microfibrillated cellulose in a total composition is not less than 65 mass% and not more than 85 mass%.

According to such a method for producing a microfibrillated cellulose-containing composition, it is not necessary to prepare a bag or sealing tape to create a sealed space when forming the sheet-shaped microfibrillated cellulose-containing composition. Therefore, the microfibrillated cellulose-containing composition can be produced efficiently. That is, a plurality of sheets of microfibrillated cellulose-containing composition can be produced in a short time and with little labor. Further, when the thus-obtained sheets of microfibrillated cellulose-containing composition are stacked and subjected to heating and compression molding to obtain a molding, boundaries in the thickness direction of the molding can be eliminated and the material can be made homogenous in the thickness direction. Therefore, a molding of high rigidity can be obtained.

In the above method for producing a microfibrillated cellulose-containing composition, the step of preparing the dispersion solution may include preparing the dispersion solution with the microfibrillated cellulose dispersed in the water at a concentration of 10 mass%. This enables the microfibrillated cellulose-containing composition to be obtained more efficiently.

### [Details of Embodiments of Present Disclosure]

Embodiments of the present disclosure will be described below. In the drawings referenced below, the same or corresponding portions are denoted by the same reference numerals and the description thereof will not be repeated.

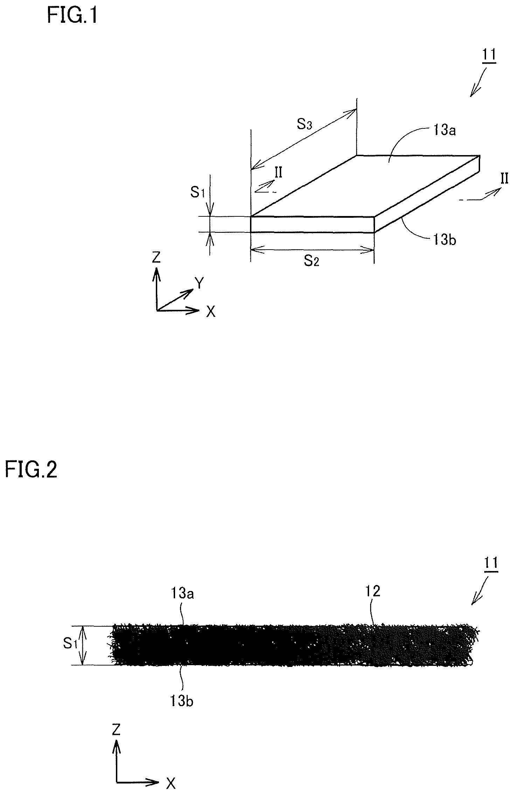

FIG. 1 is a schematic perspective view of the appearance of a molded plate according to an embodiment of the present disclosure. FIG. 2 is a schematic cross-sectional diagram showing, in enlarged view, a portion of the molded plate shown in FIG. 1. FIG. 2 is a cross-sectional diagram taken along the II-II section shown in FIG. 1.

Referring to FIGS. 1 and 2, a molding 11 according to an embodiment of the present invention is of a flat plate shape with a Z direction as the thickness direction. The molding 11 is rectangular in shape with a Y direction as the longer direction and an X direction as the shorter direction as viewed in the thickness direction. The molding 11 has a thickness S₁, i.e. a length from one surface 13a to another surface 13b of the molding 11 in the Z direction, a length S₂ in the X direction, and a length S₃ in the Y direction, which lengths are arbitrarily determined according to the application, location of use, and the like. Specifically, one having the length S₂ in the X direction of not less than 100 mm and not more than 1200 mm is suitably used. One having the length S₃ in the Y direction of not less than 100 mm and not more than 2400 mm is suitably used. Needless to say, a molding 11 of such a size can also be efficiently produced using, for example, the method for producing the molding 11 described later.

The thickness S₁ of the molding 11 is not less than 1.0 mm and not more than 100.0 mm. Specifically, the thickness S₁ of the molding 11 is 2.0 mm, for example. It should be noted that the molding 11 having the thickness S₁ of 2.0 mm or more, for example, is more suitably used. Further, one having the thickness S₁ of 4.0 mm or more and 100.0 mm or less is even more suitably used. Needless to say, a molding 11 having such a thickness can also be efficiently produced using, for example, the method for producing the molding 11 described later.

The molding 11 is composed solely of microfibrillated cellulose 12. Specifically, the molding 11 is a flat plate made up of agglomerated microfibrillated cellulose 12.

The microfibrillated cellulose 12 is also called cellulose nanofiber and is a microfibrillated cellulose fiber. Examples of the raw material for the microfibrillated cellulose 12 include plant-derived materials, animal-derived materials, and microorganism-derived materials. Chitin-derived materials and chitosan-derived materials may also be used.

The microfibrillated cellulose 12 may have a fiber diameter of not less than 10 nm and not more than 50 nm. This allows the fibers of the microfibrillated cellulose 12 to be more densely entangled in the molding 11. Therefore, the rigidity can be further increased.

The molding 11 has a flexural modulus of not less than 11.0 GPa. Such a molding 11 can be used for various applications where high rigidity is required. The flexural modulus of the molding 11 is measured using a method according to JIS-K6911. It should be noted that in the molding 11, the microfibrillated cellulose 12 is not aligned in one direction, but is randomly arranged. The molding 11 thus is isotropic. That is, for example in the case where the molding 11 is of a plate shape, the rigidity is high both in the longitudinal direction (X direction) and in the transverse direction (Y direction).

The above molding 11 has a density of not less than 1.30 g/cm³ and not more than 1.55 g/cm³. This ensures high rigidity for the molding 11 more reliably. The density of not less than 1.35 g/cm³ and not more than 1.55 g/cm³ even more reliably ensures high rigidity.

It should be noted that the molding may be of a plate shape and may include a first layer composed solely of microfibrillated cellulose, a second layer composed solely of pulp and arranged on the first layer, and a third layer composed solely of microfibrillated cellulose and arranged on a side of the second layer opposite from the side on which the first layer is arranged in the thickness direction. The molding may have a flexural modulus of not less than 11.0 GPa.

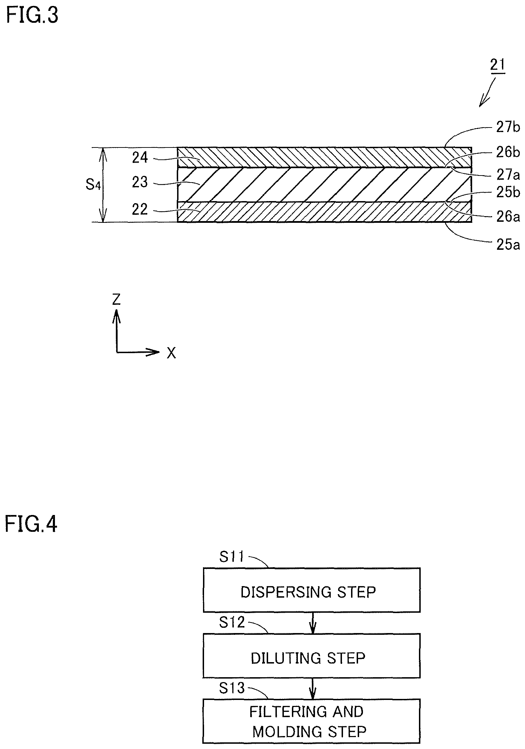

FIG. 3 is a schematic cross-sectional view of a molding according to another embodiment. Referring to FIG. 3, the molding 21 includes a first layer 22, a second layer 23, and a third layer 24. The first layer 22 and the third layer 24 are composed solely of microfibrillated cellulose. The second layer 23 is composed solely of pulp. The second layer 23 is arranged on the first layer 22. Specifically, the first layer 22 has one surface 25a in its thickness direction exposed, and another surface 25b of the first layer 22 in its thickness direction is in contact with one surface 26a of the second layer 23 in its thickness direction. The third layer 24 has one surface 27a in its thickness direction in contact with another surface 26b of the second layer 23 in its thickness direction, and another surface 27b of the third layer 24 in its thickness direction is exposed. The molding 21 has a thickness S₄, i.e. the length in the Z direction from the one surface 25a of the first layer 22 to the other surface 27b of the third layer 24, that varies arbitrarily depending on the thickness required for the molding, for example.

The molding 21 has the configuration in which the second layer 23 composed solely of pulp is sandwiched in between the first layer 22 and the third layer 24 both composed solely of microfibrillated cellulose. The second layer 23 composed solely of pulp can be produced relatively inexpensively. Therefore, the molding 21 as a whole can be produced inexpensively, while having a certain degree of thickness. Further, in this case, the first layer 22 and the third layer 24, composed solely of microfibrillated cellulose, are arranged on both sides in the thickness direction of the second layer 23 composed solely of pulp. The first layer 22 and the third layer 24 are homogeneous in the thickness direction and have high rigidity. This allows the molding 21 to have high rigidity, with the flexural modulus of not less than 11.0 GPa. Therefore, such a molding 21 can also be used effectively in the case where a molding having a certain degree of thickness and high rigidity is required.

Here, the molding shown in FIGS. 1 and 2 can be produced using, for example, a microfibrillated cellulose-containing composition of the following configuration. FIG. 4 is a flowchart illustrating typical production steps in a method for producing a microfibrillated cellulose-containing composition according to an embodiment of the present disclosure.

Referring to FIG. 4, firstly, a dispersion solution with microfibrillated cellulose dispersed in water at a predetermined concentration is prepared (step S11 in FIG. 4; hereinafter, "step" will be omitted). Next, the dispersion solution is diluted with water to achieve a desired concentration of microfibrillated cellulose (S12). Specifically, for example, the dispersion solution is diluted to have the microfibrillated cellulose concentration of about 1 mass%. Next, molding is performed to form a sheet shape while dehydrating (S13). In this case, the dispersion solution is filtered and formed into a sheet shape. In this manner, a sheet-shaped microfibrillated cellulose-containing composition is formed by filtering the dispersion solution such that a content ratio of the microfibrillated cellulose in a total composition is not less than 65 mass% and not more than 85 mass%. For filtration, besides spontaneous filtration, pressure filtration in which filtration is performed under pressure, vacuum filtration, or centrifugal filtration may be used, or suction filtration may be used. That is, the step of forming the microfibrillated cellulose-containing composition may include suction filtering the dispersion solution. This allows the filtration to be performed in a short time. Therefore, the molding can be produced more efficiently.

As such, the method for producing a microfibrillated cellulose-containing composition according to the present disclosure includes the step of forming a microfibrillated cellulose-containing composition of a sheet shape by filtering the dispersion solution such that a water content is not less than 65 mass% and not more than 85 mass%. Therefore, it is not necessary to prepare a bag or sealing tape to create a sealed space at the time of forming the sheet-shaped microfibrillated cellulose-containing composition. The microfibrillated cellulose-containing composition can thus be produced efficiently. That is, a plurality of sheets of microfibrillated cellulose-containing composition can be produced in a short time and with little labor.

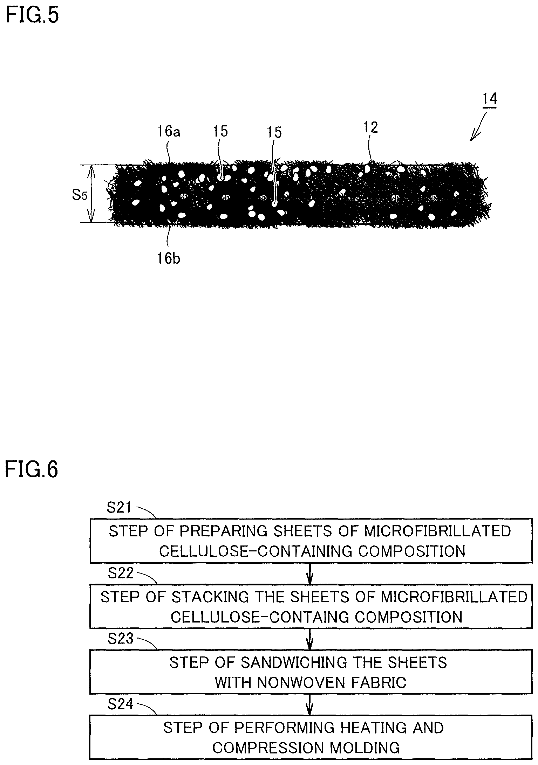

FIG. 5 is a schematic cross-sectional view of the obtained microfibrillated cellulose-containing composition. Referring to FIG. 5, the microfibrillated cellulose-containing composition 14 contains microfibrillated cellulose 12 and water 15. The microfibrillated cellulose-containing composition 14 has water 15 dispersed and mixed in a large amount of agglomerated microfibrillated cellulose 12. The microfibrillated cellulose-containing composition 14 is in the state of so-called wine lees. The microfibrillated cellulose-containing composition 14 is of a sheet shape. The microfibrillated cellulose-containing composition 14 having a thickness S₅, i.e. a length from one surface 16a to another surface 16b of the microfibrillated cellulose-containing composition 14, of not less than 0.5 mm and not more than 2.5 mm, for example, is used.

An outline of a method for producing a molding according to an embodiment of the present disclosure will now be described. FIG. 6 is a flowchart illustrating typical production steps in a method for producing the molding according to an embodiment of the present disclosure shown in FIGS. 1 and 2.

Referring to FIG. 6, a plurality of sheets of the microfibrillated cellulose-containing composition obtained by the production method shown in FIG. 4 above are prepared (S21). In this case, the sheets with identical lengths in the X direction and in the Y direction are prepared. Then, the prepared sheets of microfibrillated cellulose-containing composition are stacked (S22). That is, the plurality of sheets of microfibrillated cellulose-containing composition are stacked in the thickness direction.

Thereafter, the stacked sheets of microfibrillated cellulose-containing composition are sandwiched with nonwoven fabric arranged on each side in the thickness direction (S23). In this case, glass nonwoven fabric is used as the nonwoven fabric. Next, the plurality of sheets of microfibrillated cellulose-containing composition sandwiched with the nonwoven fabric are subjected to heating and compression molding, in which the sheets are heated while being compressed at a pressure of not less than 0.1 MPa and not more than 4.0 MPa in the thickness direction, to thereby obtain a plate-shaped molding (S24). Specifically, a metal plate of stainless steel is further arranged on the glass nonwoven fabric on each side and the pressure is applied in the thickness direction.

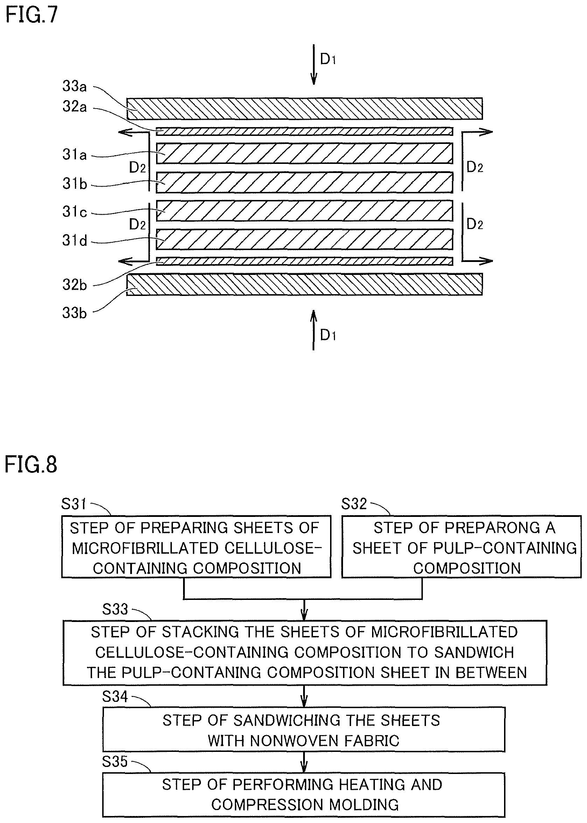

FIG. 7 is a schematic cross-sectional view of members in the case of performing heating and compression molding to obtain the molding 11 shown in FIGS. 1 and 2. Referring to FIG. 7, glass nonwoven fabric sheets 32a and 32b are arranged on both sides in the thickness direction of four stacked sheets 31a, 31b, 31c, and 31d of microfibrillated cellulose-containing composition. In other words, the stacked microfibrillated cellulose-containing composition sheets 31a, 31b, 31c, and 31d are sandwiched with the glass nonwoven fabric sheets 32a and 32b. Further, metal plates 33a and 33b of stainless steel or the like are arranged on both sides of the glass nonwoven fabric sheets 32a and 32b in the thickness direction. Through the metal plates 33a and 33b, the stacked microfibrillated cellulose-containing composition sheets 31a, 31b, 31c, and 31d are heated and compressed in the directions indicated by arrows D₁ for molding. During the heating and compression molding, the water contained in the microfibrillated cellulose-containing composition sheets 31a, 31b, 31c, and 31d mainly moves in the thickness directions first, as indicated by arrows D₂. Then, the water is discharged from the side surfaces of the glass nonwoven fabric sheets 32a and 32b.

In this manner, the microfibrillated cellulose-containing composition sheets 31a, 31b, 31c, and 31d are heated while being compressed in the thickness direction under a pressure of not less than 0.1 MPa and not more than 4.0 MPa, to obtain a plate-shaped molding as shown in FIGS. 1 and 2.

According to the above-described method for producing a molding, the microfibrillated cellulose-containing composition sheets 31a, 31b, 31c, and 31d obtained by filtration as described above have surface properties of a relatively rough state. In the molding obtained using such microfibrillated cellulose-containing composition sheets 31a, 31b, 31c, and 31d by stacking and heating and compression-molding the plurality of sheets, the portions of the stacked microfibrillated cellulose-containing composition sheets 31a, 31b, 31c, and 31d located on their surface sides become suitably entangled with each other in the thickness direction to eliminate the boundaries in the thickness direction, making the material homogenous in the thickness direction. Thus, a molding of an intended thickness can be obtained with such a configuration. Further, in the microfibrillated cellulose-containing composition sheets 31a, 31b, 31c, and 31d obtained by filtration, the microfibrillated cellulose fibers can be densely entangled. This ensures increased rigidity for the resulting molding. The obtained molding is isotropic. In other words, the molding has high rigidity both in the longitudinal direction and in the transverse direction. Thus, there is no need to be concerned about the directional properties of the molding when producing an electronic material by machining, for example, making the molding extremely valuable.

In the heating and compression molding of the stacked sheets 31a, 31b, 31c, and 31d of microfibrillated cellulose-containing composition, compression is performed at a pressure of not less than 0.1 MPa and not more than 4.0 MPa to obtain a plate-shaped molding. Since the molding process can be performed at a relatively low pressure during the heating and compression molding, large facilities are not required and the size of the molding is less restricted by the facilities. Further, the risk of the material being crushed in the thickness direction by a high pressure can be suppressed. It is thus possible to produce a large-sized molding with a relatively simple facility configuration. It is also readily possible to obtain a stack of a desired thickness.

From the foregoing, according to the method for producing a molding described above, a molding of high rigidity and large size can be produced efficiently.

A method for producing the molding shown in FIG. 3 will now be described. FIG. 8 is a flowchart illustrating typical production steps in the method for producing the molding shown in FIG. 3.

Referring to FIG. 8, a plurality of sheets of microfibrillated cellulose-containing composition, obtained by the above-described production method shown in FIG. 4, are prepared (S31). A sheet of pulp-containing composition, composed of water and pulp, is also prepared (S32). Then, the microfibrillated cellulose-containing composition sheets prepared are stacked, sandwiching the pulp-containing composition sheet in between (S33). That is, in the method for producing a molding of the present disclosure, the pulp-containing composition sheet is sandwiched in between the stacked sheets of microfibrillated cellulose-containing composition prior to the step of sandwiching the stacked microfibrillated cellulose-containing composition sheets with nonwoven fabric arranged on each side in the thickness direction. Specifically, the plurality of sheets of microfibrillated cellulose-containing composition are stacked so as to sandwich the pulp-containing composition sheet in between.

The stacked microfibrillated cellulose-containing composition sheets and pulp-containing composition sheet are then sandwiched with nonwoven fabric arranged on each side in the thickness direction (S34). Next, the microfibrillated cellulose-containing composition sheets and the pulp-containing composition sheet sandwiched with the nonwoven fabric are subjected to heating and compression molding, in which the sheets are heated while being compressed in the thickness direction at a pressure of not less than 0.1 MPa and not more than 4.0 MPa, to obtain a plate-shaped molding 21 (S35).

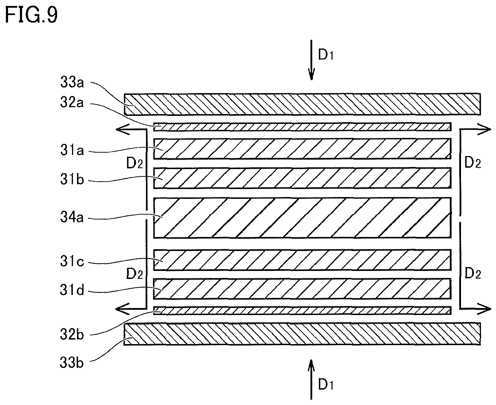

FIG. 9 is a schematic cross-sectional view of members in the case of performing heating and compression molding to obtain the molding shown in FIG. 3. Referring to FIG. 9, a sheet 34a of pulp-containing composition is sandwiched in between two stacked sheets 31a, 31b of microfibrillated cellulose-containing composition and two stacked sheets 31c, 31d of microfibrillated cellulose-containing composition. Glass nonwoven fabric sheets 32a and 32b are arranged on both sides in the thickness direction. In other words, the microfibrillated cellulose-containing composition sheets 31a, 31b, the pulp-containing composition sheet 34a, and the microfibrillated cellulose-containing composition sheets 31c, 31d, which are stacked, are sandwiched with the glass nonwoven fabric sheets 32a and 32b. Further, metal plates 33a and 33b of stainless steel are arranged on both sides of the glass nonwoven fabric sheets 32a and 32b in the thickness direction. Through these metal plates 33a and 33b, the microfibrillated cellulose-containing composition sheets 31a, 31b, the pulp-containing composition sheet 34a, and the microfibrillated cellulose-containing composition sheets 31c, 31d, which are stacked, are heated and compressed in the directions indicated by the arrows Di, for molding. During the heating and compression molding, the water contained in the microfibrillated cellulose-containing composition sheets 31a, 31b, the pulp-containing composition sheet 34a, and the microfibrillated cellulose-containing composition sheets 31c, 31d firstly moves mainly in the thickness directions, as indicated by the arrows D₂. The water is then discharged from the side surfaces of the glass nonwoven fabric sheets 32a and 32b.

In the above-described manner, the microfibrillated cellulose-containing composition sheets 31a, 31b, the pulp-containing composition sheet 34a, and the microfibrillated cellulose-containing composition sheets 31c, 31d are heated while being compressed in the thickness direction at a pressure of not less than 0.1 MPa and not more than 4.0 MPa, whereby a plate-shaped molding as shown in FIG. 3 is obtained.

Such a molding has the configuration in which the second layer composed solely of pulp is sandwiched in between the first layer and the third layer both composed solely of microfibrillated cellulose. The second layer composed solely of pulp can be produced relatively inexpensively. Therefore, the molding as a whole can be produced inexpensively, while having a certain degree of thickness. Further, in this case, the first and third layers each composed solely of microfibrillated cellulose are arranged on both sides in the thickness direction of the second layer composed solely of pulp. The first and third layers are homogeneous in the thickness direction and have high rigidity. This ensures high rigidity for the molding, with the flexural modulus of not less than 11.0 GPa. Therefore, such a molding can also be used effectively in the case where the molding is required to have a certain degree of thickness and high rigidity.

Further, since pulp is a commonly used material, the pulp-containing composition sheet 34a in the above configuration can be produced more inexpensively than the microfibrillated cellulose-containing composition sheets 31a, 31b, 31c, and 31d. Here, the resulting molding 21 has the layers composed of microfibrillated cellulose arranged on both sides in the thickness direction, which can suppress the reduction in rigidity. Therefore, according to such a method for producing a molding, a molding having high rigidity and a desired thickness can be produced inexpensively.

It should be noted that while the microfibrillated cellulose fibers with a diameter of not less than 10 nm and not more than 1000 nm are used in the above embodiments, not limited thereto, the fibers with a diameter of several nm to several thousand nm are used depending on the application, cost, and the like.

Further, while glass nonwoven fabric is used as the nonwoven fabric in the above embodiments, not limited thereto, nonwoven fabrics composed of fibers of organic materials or fibers of inorganic materials may also be used. Of course, for the nonwoven fabric sheets arranged on both sides, different nonwoven fabrics may be used, instead of the same fabric.

### EXAMPLES

Moldings were formed according to the formulations and techniques indicated in Samples 1 to 13, and evaluation tests were conducted. The evaluation results are shown in Table 1. It should be noted that Sample 11, Sample 12, and Sample 13 are not shown in Table 1 because it was not possible to obtain moldings with these samples. Samples 1 to 8 are within the scope of the present invention. Samples 9 to 13 are outside the scope of the present invention.

### Sample 1

Microfibrillated cellulose ("BiNFi-S BMa10010" manufactured by Sugino Machine Limited; with a fiber diameter of 10 nm or more and 50 nm or less) dispersed in water at a concentration of 10 mass% was prepared. The solution was diluted with water to 1 mass%, and then the water was removed by filtration to achieve a water content of not less than 65 mass% and not more than 85 mass%, thereby obtaining an MFC-containing composition of a sheet shape with a thickness of 2.5 mm. Here, water was removed by suction filtration. Two sheets of the MFC-containing composition were produced in the above-described manner and stacked. Thereafter, two sheets of glass nonwoven fabric with a mass per unit area of 47 g/cm² were prepared and arranged to sandwich the stacked MFC-containing composition sheets therebetween, which were further sandwiched with two metal plates of stainless steel. Then, heating and compression molding was performed at 150°C for one hour. The pressure was increased stepwise from 0.5 MPa to a final pressure of 4.0 MPa. The resulting molding had a thickness of 1.0 mm. For the molding, flexural modulus, flexural stress, and density were measured. The measurement was performed in accordance with JIS-K6911. The same applies to the measurement for the samples below.

### Sample 2

A molding according to Sample 2 was obtained similarly as in Sample 1, except that four sheets of MFC-containing composition obtained by the production method shown in FIG. 3 were stacked. The obtained stack had a thickness of 2.0 mm.

### Sample 3

A molding according to Sample 3 was obtained similarly as in Sample 1, except that eight sheets of MFC-containing composition obtained by the production method shown in FIG. 3 were stacked. The obtained stack had a thickness of 4.0 mm.

### Sample 4

A molding according to Sample 4 was obtained similarly as in Sample 1, except that 20 sheets of MFC-containing composition obtained by the production method shown in FIG. 3 were stacked. The obtained stack had a thickness of 10.0 mm.

### Sample 5

A molding according to Sample 5 was obtained similarly as in Sample 1, except that 100 sheets of MFC-containing composition obtained by the production method shown in FIG. 3 were stacked. The obtained stack had a thickness of 50.0 mm.

### Sample 6

A molding according to Sample 6 was obtained similarly as in Sample 1, except that 200 sheets of MFC-containing composition obtained by the production method shown in FIG. 3 were stacked. The obtained stack had a thickness of 100.0 mm.

### Sample 7

A molding according to Sample 7 was obtained similarly as in Sample 1, except that the MFC was changed to MFC ("Cellish KY-100G" manufactured by Daicel FineChem Ltd.; with a fiber diameter of 0.01 to 1 µm). The obtained stack had a thickness of 1.0 mm.

### Sample 8

MFC ("BiNFi-S BMa10010" manufactured by Sugino Machine Limited) dispersed in water at a concentration of 10 mass% was prepared. The solution was diluted with water to 1 mass%, and then the water was removed by filtration to achieve a water content of not less than 65 mass% and not more than 85 mass%, thereby obtaining an MFC-containing composition of a sheet shape with a thickness of 1.2 mm. Here, water was removed by suction filtration. Two sheets of the MFC-containing composition were produced in the above-described manner. Further, a dispersion solution with commercially available toilet rolls (e.g., nepia rolls with 100% fresh pulp manufactured by Oji Nepia Co., Ltd.) as pulp released in water at a concentration of 10 mass% was prepared. The dispersion solution was diluted with water to 1 mass%, and then the water was removed by filtration to achieve a water content of not less than 65 mass% and not more than 85 mass%, thereby obtaining a pulp-containing composition of a sheet shape with a thickness of 2.5 mm. Here, water was removed by suction filtration. The obtained pulp-containing composition sheet was sandwiched in between the obtained two sheets of MFC-containing composition. Thereafter, two sheets of glass nonwoven fabric with a mass per unit area of 47 g/cm² were prepared to sandwich the MFC-containing composition sheets therebetween, which were further sandwiched with two metal plates of stainless steel. Then, heating and compression molding was performed at 150°C for one hour. The pressure was increased stepwise from 0.5 MPa to a final pressure of 4.0 MPa. The resulting molding had a thickness of 1.0 mm.

### Sample 9

MFC ("BiNFi-S BMa10010" manufactured by Sugino Machine Limited) dispersed in water at a concentration of 10 mass% was used to obtain a molding with a thickness of 1.0 to 4.0 mm, with a technique of integral molding on the basis of the production method in Patent Literature 2.

### Sample 10

A molding according to Sample 10 was obtained similarly as in Sample 9, except that the MFC in Sample 9 was changed to MFC ("Cellish KY-100G" manufactured by Daicel FineChem Ltd.) The obtained stack had a thickness of 1.0 mm.

### Sample 11

The procedure was identical to that in Sample 1 except that the stacked sheets of MFC-containing composition were not sandwiched with glass nonwoven fabric sheets during production. In this case, the stacked sheets of MFC-containing composition did not bond at the interface, making it unable to obtain a molding.

### Sample 12

MFC ("BiNFi-S BMa10010" manufactured by Sugino Machine Limited; with a fiber diameter of 10 nm or more and 50 nm or less) dispersed in water at a concentration of 10 mass% was prepared. The solution was used as it was (without dehydration) to obtain sheets of MFC-containing composition having a thickness of 5.0 mm. The procedure was identical to that in Sample 1 except that such sheets were used. In this case, the MFC flowed during compression, making it unable to obtain a molding of a desired thickness.

### Sample 13

MFC ("BiNFi-S BMa10010" manufactured by Sugino Machine Limited; with a fiber diameter of 10 nm or more and 50 nm or less) dispersed in water at a concentration of 10 mass% was prepared. The solution was diluted with water to 1 mass%, and then the water was removed by filtration to achieve a water content of less than 65 mass%, to thereby obtain sheets of MFC-containing composition having a thickness of 2.0 mm. The procedure was identical to that in Sample 1 except that such sheets were used. In this case, the stacked sheets of MFC-containing composition did not bond at the interface, making it unable to obtain a molding.

**[Table 1]**

| | Sample 1 | Sample 2 | Sample 3 | Sample 4 | Sample 5 | Sample 6 | Sample 7 | Sample 8 | Sample 9 | Sample 10 |
|---|---|---|---|---|---|---|---|---|---|---|
| MFC type | BiNFi-S | BiNFi-S | BiNFi-S | BiNFi-S | BiNFi-S | BiNFi-S | Cellish | BiNFi-S | BiNFi-S | Cellish |
| Method of Molding | Stacking | Stacking | Stacking | Stacking | Stacking | Stacking | Stacking | Stacking | Integral Molding | Integral Molding |
| Time for Dehydration (hour) | 2 | 2 | 2 | 2 | 2 | 2 | 1 | 1 | 12 or more | 2.5 |
| Thickness (mm) | 1.0 | 2.0 | 4.0 | 10.0 | 50.0 | 100.0 | 1.0 | 1.0 | 1.0 to 4.0 | 1.0 |
| Flexural Modulus (GPa) | 12.8 | 12.8 | 12.8 | 12.8 | 12.8 | 12.8 | 11.9 | 12.0 | 8.8 | 7.3 |
| Density (g/cm³) | 1.40 | 1.40 | 1.40 | 1.40 | 1.40 | 1.40 | 1.35 | 1.30 | 1.30 | 1.25 |
| Flexural Stress (MPa) | 210 | 210 | 210 | 210 | 210 | 210 | 170 | 160 | 155 | 110 |

Referring to Table 1, for Sample 1, Sample 2, Sample 3, Sample 4, Sample 5, and Sample 6, the flexural modulus was 12.8 GPa, which is a very high value. In other words, the moldings had extremely high rigidity. For Sample 2, the thickness of the molding was 2.0 mm, and for Sample 3, the thickness of the molding was 4.0 mm. For Sample 4, the thickness of the molding was 10.0 mm, which is sufficiently thick. For Sample 5, the thickness of the molding was 50.0 mm, which is very thick. For Sample 6, the thickness of the molding was 100.0 mm, which is extremely thick. For Samples 1 to 6, the density was 1.40 g/cm³, which is a high value. The flexural stress for Samples 1 to 6 was 210 MPa, which is a high value even from the standpoint of strength.

For Sample 7, the flexural modulus was 11.9 GPa, which is also considerably high, resulting in a molding with high rigidity. The density for Sample 7 was 1.35 g/cm³, which is a high value. The flexural stress for Sample 7 was 170 MPa, which is a high value even from the standpoint of strength.

For Sample 8 as well, the flexural modulus was a high value of 12.0 GPa, resulting in a highly rigid material. The density for Sample 8 was 1.30 g/cm³, which is a high value. The flexural stress for Sample 8 was 160 MPa, which is a high value even from the standpoint of strength.

On the other hand, Sample 9 required 12 or more hours to remove water (time for dehydration), which is very inefficient in terms of production. In addition, the obtained molding had a flexural modulus of 8.8 GPa, which is a small value. Also, the density was 1.30 g/cm³.

For Sample 10, the time required for removing water was 2.5 hours, which is longer than in Samples 1 to 8. Further, the obtained molding had a flexural modulus of 7.3 GPa, which is a very small value. The density was also considerably low at 1.25 g/cm³.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### Reference Signs List

11, 21: molding; 12: microfibrillated cellulose; 13a, 13b, 16a, 16b, 25a, 25b, 26a, 26b, 27a, 27b: surface; 14, 31a, 31b, 31c, 31d: microfibrillated cellulose-containing composition; 15: water; 22: first layer; 23: second layer; 24: third layer; 32a, 32b: glass nonwoven fabric; 33a, 33b: metal plate; and 34a: pulp-containing composition.

## Claims

1. A method for producing a molding containing microfibrillated cellulose, comprising the steps of:
preparing a dispersion solution with microfibrillated cellulose dispersed in water at a predetermined concentration;
forming a microfibrillated cellulose-containing composition of a sheet shape by filtering the dispersion solution such that a water content is not less than 65 mass% and not more than 85 mass%;
preparing a plurality of sheets of the microfibrillated cellulose-containing composition;
stacking the plurality of sheets of microfibrillated cellulose-containing composition in a thickness direction of the sheets;
sandwiching the stacked sheets of microfibrillated cellulose-containing composition with nonwoven fabric arranged on each side in the thickness direction; and
performing heating and compression molding to obtain a plate-shaped molding by heating the sheets of microfibrillated cellulose-containing composition sandwiched with the nonwoven fabric while compressing the sheets at a pressure of not less than 0.1 MPa and not more than 4.0 MPa in the thickness direction.

2. The method for producing a molding according to claim 1, further comprising the steps of:
preparing a pulp-containing composition of a sheet shape, composed of water and pulp; and
sandwiching the pulp-containing composition in between the plurality of sheets of microfibrillated cellulose-containing composition prior to the step of sandwiching the stacked sheets of microfibrillated cellulose-containing composition with the nonwoven fabric arranged on each side in the thickness direction.

3. The method for producing a molding according to claim 1 or 2, wherein the step of forming the microfibrillated cellulose-containing composition includes suction filtering the dispersion solution.

4. The method for producing a molding according to any one of claims 1 to 3, wherein the nonwoven fabric is glass nonwoven fabric.

5. The method for producing a molding according to any one of claims 1 to 4, wherein the step of performing the heating and compression molding includes heating the stacked sheets of microfibrillated cellulose-containing composition at a temperature of not lower than 100 degrees and not higher than 150 degrees and maintaining the stacked sheets under a pressure of not less than 0.1 MPa and not more than 4.0 MPa for a period of not shorter than 30 minutes and not longer than 120 minutes.

6. The method for producing a molding according to any one of claims 1 to 5, wherein the step of performing the heating and compression molding includes performing compression by increasing the pressure stepwise from 0.5 MPa to 4.0 MPa.

7. A molding composed solely of microfibrillated cellulose, having a flexural modulus of not less than 11.0 GPa.

8. A molding of a plate shape, comprising:
a first layer composed solely of microfibrillated cellulose;
a second layer composed solely of pulp, the second layer being arranged on the first layer; and
a third layer composed solely of microfibrillated cellulose, the third layer being arranged on a side of the second layer opposite from a side on which the first layer is arranged in a thickness direction;
the molding having a flexural modulus of not less than 11.0 GPa.

9. The molding according to claim 7 or 8, having a plate shape with a thickness of not less than 2.0 mm.

10. The molding according to any one of claims 7 to 9, having a density of not less than 1.30 g/cm³ and not more than 1.55 g/cm³.

11. The molding according to any one of claims 7 to 10, wherein the microfibrillated cellulose has a fiber diameter of not less than 10 nm and not more than 1000 nm.

12. A method for producing a microfibrillated cellulose-containing composition, comprising the steps of:
preparing a dispersion solution with microfibrillated cellulose dispersed in water at a predetermined concentration; and
forming a microfibrillated cellulose-containing composition of a sheet shape by filtering the dispersion solution such that a content ratio of the microfibrillated cellulose in a total composition is not less than 65 mass% and not more than 85 mass%.

13. The method for producing a microfibrillated cellulose-containing composition according to claim 12, wherein the step of preparing the dispersion solution includes preparing the dispersion solution with the microfibrillated cellulose dispersed in the water at a concentration of 10 mass%.
